(19) Europäisches Patentamt
European Patent Office
Office européen des brevets

(11) **EP 2 394 209 B1**

(12) **EUROPÄISCHE PATENTSCHRIFT**

(45) Veröffentlichungstag und Bekanntmachung des Hinweises auf die Patenterteilung:
**10.07.2013   Patentblatt 2013/28**

(51) Int Cl.:
*G06F 3/0354* *(2013.01)*      *G06F 3/037* *(2013.01)*
*G06F 3/038* *(2013.01)*      *G06F 3/042* *(2006.01)*

(21) Anmeldenummer: **10702988.6**

(86) Internationale Anmeldenummer:
**PCT/AT2010/000001**

(22) Anmeldetag: **04.01.2010**

(87) Internationale Veröffentlichungsnummer:
**WO 2010/078609 (15.07.2010 Gazette 2010/28)**

(54) **DETEKTORFLÄCHE**

DETECTOR SURFACE

SURFACE DE DÉTECTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **07.01.2009   AT 182009**

(43) Veröffentlichungstag der Anmeldung:
**14.12.2011   Patentblatt 2011/50**

(73) Patentinhaber: **isiQiri interface technologies GmbH**
**4232 Hagenberg (AT)**

(72) Erfinder:
• **KOEPPE, Robert**
  **4020 Linz (AT)**
• **EBNER, Richard**
  **4600 Wels (AT)**

(74) Vertreter: **Burgstaller, Peter**
**Rechtsanwalt**
**Landstrasse 12**
**Arkade**
**4020 Linz (AT)**

(56) Entgegenhaltungen:
WO-A1-2010/006348      DE-A1- 2 952 608
DE-A1- 3 413 372      DE-A1- 3 511 757
US-A1- 2007 152 985

**Beschreibung**

Die vorliegende Erfindung betrifft eine Detektorfläche, welche als flexible Hüllfläche um einen oder an einem Körper angeordnet sein kann, um zu detektieren ob und wo der Körper durch einen Leuchtzeiger getroffen wird.

Der zur Zeit wichtigste Anwendungsfall ist die Detektion von Treffern bei Kampfsimulationen bzw. Kampfspielen, bei denen an Stelle von Schusswaffensimulatiansgeräten die etwas Materielles wie einen Farbstoff oder einen weichen Schaumgummiball abfeuern, Leuchtgeräte eingesetzt werden, welche einen kollimierten Lichtimpuls absenden.

Die US 2007/0176165 A1 zeigt eine Bauweise für einen auf lichtempfindlichen organischen Halbleitern basierenden flächig aufgebauten Positionsdetektor für einen auftreffenden Lichtpunkt. Der flächig aufgebaute Detektor bildet eine einzige großflächige Sensorzelle. Er besteht aus mehreren Schichten von denen mindestens eine Schicht photoaktiv ist. An seinem Rand ist der Positionsdetektor mit voneinander beabstandeten Anschlusselektroden versehen mittels derer ein elektrisches Signal abgenommen werden kann, aus welchem auf den Ort des Auftreffens eines Lichtstrahls geschlossen wird. Gegenüber einer Bauweise mit vielen nebeneinander angeordneten einzelnen lichtempfindlichen Zellen ist die Anordnung kostengünstiger und einfacher aufgebaut, allerdings bietet sie weniger Auflösung.

In der US 2007/0152985 A1 wird ein als flächiger Lichtwellenleiter ausgebildetes optisches Touchpad vorgestellt. Ein Gegenstand, welcher in Kontakt mit dem Wellenleiter des Touchpads ist, koppelt Licht aus einer externen Quelle über Streuung an der Oberfläche des Gegenstands in den Wellenleiter des Touchpads ein. Die Detektion des Orts der Einkopplung wird mit einem nicht näher beschriebenen photoelektrischen Detektor ermöglicht.

Die Schriften DE 3511757 A1, DE 42 39 389 A1, EP 354 996 A2 und EP 225 625 A2 beschreiben optische Positionsmesseinrichtungen, bei denen an oder in einer lichtwellenleitenden Fläche fluoreszierende Moleküle angeordnet sind, welche von außen auftreffendes Licht in langwelligeres, diffus gestreutes Licht umwandeln, welches in der lichtwellenleitenden Fläche zu deren Flächenrändern hin geleitet wird und entweder schon dort in seiner Intensität durch Sensoren erfasst wird oder erst an einem anderen Ort, zu dem es über Lichtleiter geführt wird. Da die Intensität des gemessenen Lichtes mit der Entfernung zum Auftreffpunkt des Lichtstrahles abnimmt, kann durch Kombination der Messergebnisse aus mehreren Sensoren auf den Auftreffpunkt des Lichtstrahles rückgeschlossen werden. Gegenüber der zuvor beschriebenen Methode, bei der das auftreffende Licht ohne Umwandlung im Wellenleiter zu den Sensoren geführt wird, ist vorteilhaft, dass das Signal weniger vom Winkel abhängig ist, mit dem der Lichtstrahl auf die Fläche trifft. Die Verwendung dieses Prinzips für ein Eingabegerät einer Datenverarbeitungsanlage ist in diesen Schriften nicht angedacht. Die Positionsauflösung ist zudem bei größeren Flächen dafür nicht ausreichend gut, da in den vorliegenden Schriften die Detektoren am Rand des Wellenleiters angebracht werden,

In der DE 2952608 A1 wird ein Trainingsanzug vorgeschlagen, welcher mit einer Vielzahl von voneinander beabstandeten, annähernd punktförmigen optischen Sensoren, typischerweise Photodioden, ausgestattet ist, Der Trainingsanzug dient dazu, bei Kampfsimulationsübungen bzw. Kampfsimulationsspielen anzuzeigen, wenn die den Trainingsanzug tragende Person "getroffen" wurde. Als schusswafiensimulationsgeräte werden dabei Geräte verwendet, mit denen gezielt zeitlich kurze, gerichtete Laserlichtimpulse abgesendet werden können. Für das Registrieren von Treffern sind die einzelnen Sensoren mit einer Datenverarbeitungsanlage verbunden.

Aus Kosten- und Handhabungsgründen werden die Kleidungsflächen dabei nicht flächendeckend mit photoelektrischen Sensoren ausgestattet sondern nur mit einer Anordnung in einem relativ groben Abstandsraster. Damit ein Treffer sicher detektiert wird, muss der Laserlichtimpuls stark aufgeweitet werden, womit unter Umständen auch Treffer angezeigt werden, obwohl knapp neben die Zielperson gezielt wurde.

Die DE 34 13 372 A1 beschreibt schon 1985 eine Zielscheibe, von welcher der Ort des Auftreffens eines Lichtpunktes detektiert und in eine Datenverarbeitungsanlage eingelesen wird. An der Vorderseite der starren Zielscheibe ist eine Schicht angeordnet, welche fluoreszierende Moleküle beinhaltet und Lichtwellen in der Schicht leiten kann. An einem Rand der Schicht ist ein Photodetektor angebracht, an welchem Licht welches durch Fluoreszenz entstanden ist und in der Schicht geleitet wird, detektiert wird. Da die Intensität des in der Schicht geleiteten Lichtes mit der Entfernung zum Auftreffpunkt abnimmt, kann aus der Intensität des an einem Photodetektor detektierten Lichtes auf die Entfernung des Auftreffpunktes des Lichtpunktes auf der Schicht rückgeschlossen werden. Wenn der Positionsdetektor am Innenrand einer kreisringförmigen, lichtwellenleitenden Schicht angeordnet ist, kann aus der gemessenen Signalstärke auf den Radialabstand des Auftreffpunktes des Lichtpunktes zum Positionsdetektor rückgerechnet werden. In einer vorteilhaften Weiterentwicklung ist die lichtleitende Fläche in längliche Streifen konstanter Breite eingeteilt, welche bezüglich Lichtleitung voneinander getrennt sind. Dabei ist an jedem Längsende eines Streifens jeweils ein Photodetektor angebracht. Aus dem Größenverhältnis der an beiden Photodetektoren eines Streifens gemessenen Lichtintensitäten kann man so auch dann gut auf den Ort des Auftreffens eines Lichtpunktes an dem Streifen rückrechnen, wenn die absolute Größe der am Auftreffpunkt in die Lumineszenzwellenleitung eingebrachte Lichtenergie nicht bekannt ist. Gegenüber der Bauweise entsprechend der zuvor beschriebenen DE 2952608 A1 ist vorteilhaft, dass damit "flächendeckend" detektiert werden kann. Nachteilig ist, dass sie bislang nur an starre Detektorflächen anwendbar ist.

Die der Erfindung zu Grunde liegende Aufgabe besteht darin, eine Detektorfläche, welche als flexible Hüllfläche um einen Körper angeordnet sein kann zu schaffen, welche in einer für eine Datenverarbeitungsanlage weiterverarbeitbaren Weise wie die Bauweise entsprechend der DE 34 13 372 A1 "flächendeckend" und nicht wie die Bauweise entsprechend der DE 2952608 A1 nur punktuell detektieren kann, ob und wo an der Detektorfläche ein Lichtpunkt auftrifft.

Zum Lösen der Aufgabe wird wie bei der DE 34 13 372 A1 von einer Bauweise ausgegangen, bei der die Detektorfläche ein flächiger Lichtwellenleiter ist, in welchem photolumineszente Partikel integriert sind und an welchem ein oder mehrere photoelektrische Sensoren - des weiteren kurz als "Photodetektor" bezeichnet - angebracht sind, welche im Stande sind, Licht aus der Wellenleitermode auszukoppeln und dadurch ein elektrisches Signal zu generieren, dessen Stärke von der der Intensität des am Photodetektor ausgekoppelten Lichtes abhängig ist. Das Signal wird an eine Datenverarbeitungsanlage übertragen. Durch diese ist erkennbar, wie stark das Signal ist und - im Fall der Verwendung mehrerer Photodetektoren - von welchem Photodetektor es stammt. Im Unterschied zur bekannten Bauweise, ist der flächige Lichtwellenleiter nicht starr ausgebildet, sondern als flexible Folie. Dazu ist der flächige Lichtwellenleiter aus einem transparenten Polymer mit einer Schichtdicke von 20 bis 500 $\mu$m gebildet. (Mit dem Begriff "transparentes Polymer" sind im Sinne dieser Beschreibung und der nachfolgenden Ansprüche auch "transparente Polymermischungen" gemeint und umfasst.) In einem weiteren Unterschied zu der bekannten Bauweise sind die Photodetektoren nicht bzw. nicht nur am Rand der Fläche des Lichtwellenleiters angeordnet, sondern vor allem auch an Flächenbereichen, die von allen Rändern entfernt liegen. In einer besonders bevorzugten Ausführungsform ist ein Photodetektor in einer Mulde des Lichtwellenleiters angeordnet, welche durch ein Umformverfahren wie Tiefziehen oder Prägen in der ansonsten ebenen Folie gebildet ist.

Bezüglich der Flächenzuordnung von Wellenleiterfläche zu einzelnen Photodetektoren kann man zwei prinzipielle Arten - welche aber miteinander kombinierbar sind - unterscheiden: Gemäß dem ersten Prinzip ist die gesamte Detektorfläche durch eine Vielzahl von einzelnen kleineren flächigen Lichtwellenleitern gebildet, welche geometrisch aneinander angrenzen, bezüglich der Wellenleitung aber voneinander getrennt sind. Jeder Lichtwellenleiter ist mit genau einem Photodetektor versehen. Dieser stellt nur fest ob der jeweilige Lichtwellenleiter von einem Lichtstrahl getroffen wurde oder nicht. Er braucht keine Information darüber liefern, an welcher Teilfläche des Lichtwellenleiters genau die betreffende Teil-Detektorfläche getroffen wurde.

Gemäß dem zweiten Prinzip kann die gesamte Detektorfläche als einziger durchgehender Lichtwellenleiter realisiert sein. Dieser Lichtwellenleiter weist in einem Rasterabstand zueinander eine Vielzahl von kleinflächigen Photodetektoren auf. In Abhängigkeit davon, wie nahe einzelne Photodetektoren dem jeweiligen Einkopplungspunkt von Licht in den Wellenleiter sind, ist ihr gemessenes Signal unterschiedlich stark. Damit kann aus der Amplitude von Signalen mehrerer Photodetektoren deren Lage auf dem Wellenleiter bekannt ist, auf den Einkopplungspunkt rückgerechnet werden.

Das erste Prinzip ist robuster und führt zu einfacherer Auswerteelektronik und einfacherer Datenverarbeitung. Gemäß dem zweiten Prinzip kann ohne Kostensteigerung eine feinere Auflösung erzielt werden.

Die Kombination der beiden Prinzipien besteht darin, dass die gesamte Detektorfläche in mehrere flächige Lichtwellenleiter unterteilt ist, von denen zumindest manche Lichtwellenleiter zwecks feinerer Auflösung mit mehr als einem Photodetektor ausgestattet sind. Dies kann zum Beispiel einer größeren mechanischen Belastbarkeit und einer einfacheren Formbarkeit dienen.

Die Erfindung ist durch Anspruch 1 definiert und wird an Hand von Zeichnungen veranschaulicht.

Fig. 1: zeigt symbolhaft die wesentlichen Elemente des zweiten Prinzips. Die Detektorfläche selbst ist nicht maßstäblich in Querschnittsansicht skizziert, Lichtstrahlen sind durch punktierte Linien symbolisiert.

Fig. 2: ist ein Frontalanblick auf einen Ausschnitt einer erfindungsgemäßen Detektorfläche.

Fig. 3: ist eine Teilschnittansicht auf einen Ausschnitt einer besonders vorteilhaft ausgebildeten Detektorfläche.

Fig. 4: ist eine Teilschnittansicht auf einen Ausschnitt einer weiteren, vorteilhaft ausgebildeten Detektorfläche.

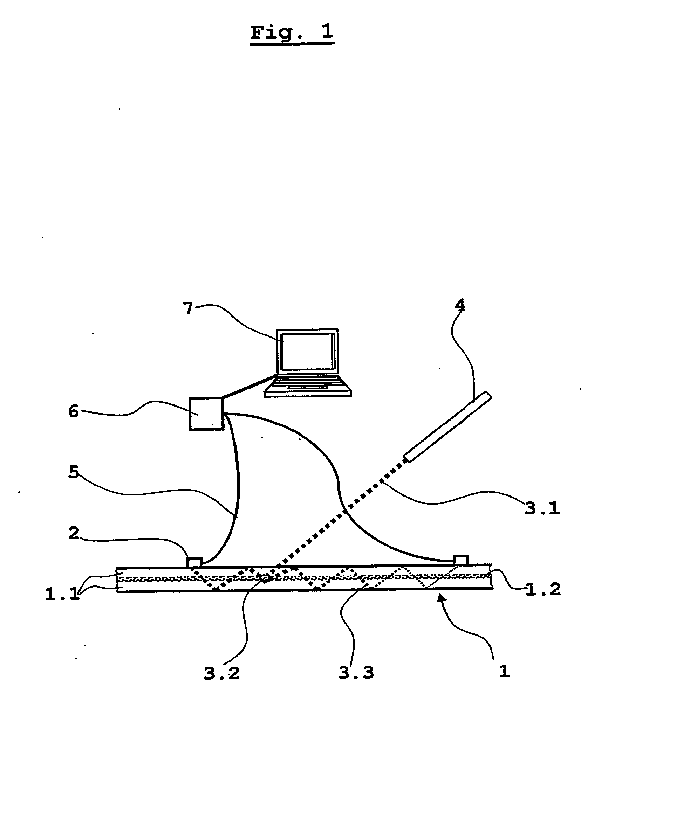

Der in seinem Aufbau in Fig. 1 skizzierte, flächige Lichtwellenleiter 1 besteht beispielsweise aus zwei ca. 0.1 mm dicken Deckschichten 1.1 aus PET, zwischen welchen eine ca. 0.001 mm dicke Schicht 1.2 aus einer homogenen Mischung des Kunststoffs Polyvinylalkohol und des Farbstoffs Rhodamin 6G laminiert ist. Die Schicht 1.2 ist photolumineszent. Sie ist so stark, dass ihre Absorption für normal darauf auftreffendes Licht mit 532 nm Wellenlänge über 80% beträgt. (Die dafür erforderliche Schichtstärke ist am besten durch Versuch zu ermitteln).

Wenn ein Lichtfleck mit passendem Spektrum auf die Schicht 1.2 trifft, so löst er Photolumineszenz an den Farbstoffpartikeln der Schicht 1.2 aus. Dabei entsteht diffus gestreutes, langwelligeres Licht. Entsprechend dem bekannten zu Grunde liegenden Funktionsprinzip der Lichtwellenleitung breitet es sich in den transparenten Schichten 1.1 aus und bleibt im wesentlichen auch in diesen Schichten, das es an den Grenzflächen zur Umgebung (Luft) auf Grund des unterschiedlichen Brechungsindex in das Material der Schichten 1.1 zurückreflektiert wird.

Beispielsweise in einem quadratischen Raster mit 5 cm Periodenlänge sind Photodetektoren 2, welche eine Querschnittsfläche von etwa 2x2 mm$^2$ einnehmen an der frei liegenden Seite einer der beiden PET-Schichten 1.2 so angebracht, dass sie Licht aus der PET-Schicht auskoppeln und an ihren pn-Übergang einkoppeln. Die Signale aller Photodioden 2 werden über elektrische Leitungen 5 und einen Frequenzfilter 6 einer Datenverarbeitungsanlage 7 zugeführt in welcher sie gemessen und verarbeitet werden.

Die Intensität des im Lichtwellenleiter 1 am auftreffenden Lichtfleck 3.2 durch Photolumineszenz generierten Lichtes 3.3 nimmt mit steigender Entfernung vom Lichtfleck 3.2 ab. Aus geometrischen Gründen nimmt die Intensität proportional zum Kehrwert der Entfernung ab. Zu einer weiteren, exponentiellen Abnahme der Intensität kommt es deswegen weil die Lichtleitung im Wellenleiter mit Verlusten behaftet ist.

Die Intensität des Lichtes 3.3 im Wellenleiter in Abhängigkeit vom Abstand r zum einem Auftreffpunkt eines Lichtflecks 3.2, also zu dem Punkt an welchem die Lumineszenz stattfindet, lässt sich somit mit folgender Formel beschreiben:

$$I = I_0 * \exp(-k.r)/r$$

Dabei ist k ein Materialparameter und die Ausgangsintensität $I_0$ von der Energie des eingebrachten Lichtstrahls 3.1 abhängig. Damit ist auch die Stärke des an den einzelnen Photodetektoren auf Grund von detektiertem Licht erzeugten elektrischen Signals vom Abstand der einzelnen Photodetektoren zum Auftreffpunkt eines Lichtflecks 3.2 abhängig.

Wenn an einen flächigen Lichtwellenleiter mehrere Photodetektoren angeschlossen sind, so werden an diesen unterschiedliche Intensität des Lichts in der Wellenleitermode gemessen, wobei die Messergebnisse davon abhängen, wie weit der messende Photodetektor vom Auftreffpunkt des die Lumineszenz erzeugenden Lichtflecks entfernt liegt. Aus dem Verhältnis der gemessenen Signalstärken an den einzelnen Photodetektoren kann mit datentechnisch automatisierbaren, mathematischen Methoden auf die genauere Auftreffposition des die Lumineszenz auslösenden Lichtstrahls auf der Detektorfläche rückgeschlossen werden.

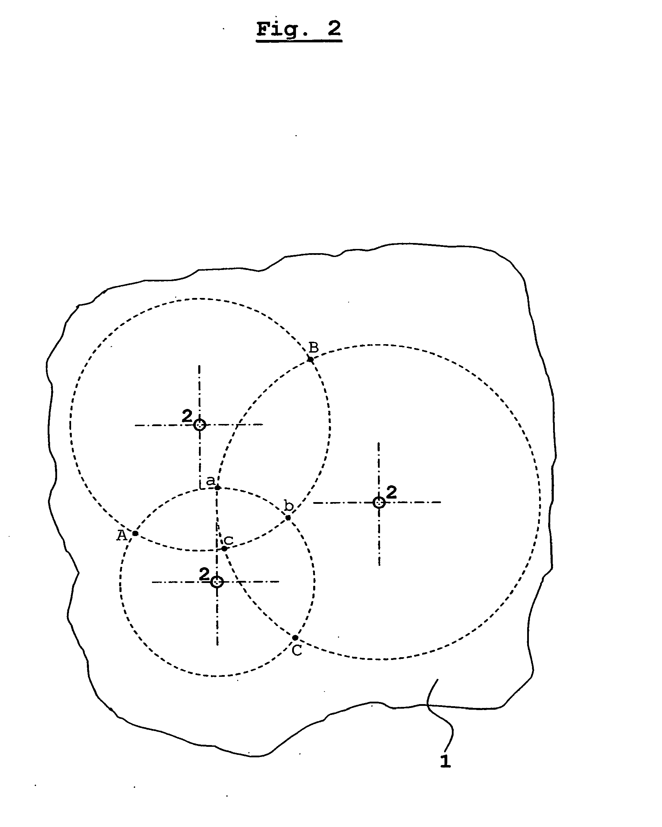

Zur Veranschaulichung eines dazu tauglichen, im Folgenden grob skizzierten Algorithmus dient Fig. 2:

Unter Annahme einer für alle betrachteten Photodetektoren gleichen Ausgangsintensität $I_0$ kann in Abhängigkeit von den an den einzelnen Photodetektoren gemessenen Ergebnissen zu den einzelnen Photodetektoren errechnet werden, auf welcher Kreislinie rund um den betreffenden Photodetektor der Auftreffpunkt des zu lokalisierenden Lichtflecks liegen müsste. Von drei Photodetektoren sind die dementsprechenden Kreise beispielhaft in Fig. 2 in strichlierten Linien eingezeichnet. Die Kreise weisen insgesamt sechs Schnittpunkte A,B, C,a,b,c auf. Nun wird für die Berechnung die für alle drei Photodetektoren gültige Ausgangsintensität $I_0$ so lange vergrößert oder verkleinert, bis die drei inneren Schnittpunkte a, b, c gemäß Fig. 2 auf einen einzigen Schnittpunkt zusammen fallen. Das Zentrum des auftreffenden Lichtflecks liegt genau an diesem so gefundenen "Dreifachschnittpunkt".

Wenn die Entfernungen zwischen den einzelnen Photodetektoren nicht größer als wenige cm sind, ist die durch Verlust verursachte exponentielle Abminderung der Intensität des im Wellenleiter geleiteten Lichtes gegenüber der geometriebedingten Abminderung der Intensität unbedeutend. Die oben genannte Formel kann dann durch die Formel

$$I = I_0/r$$

ausreichend gut angenähert werden. Damit kann die Berechnung vereinfacht und der beschriebene Algorithmus rascher durchlaufen werden.

Bei der Arbeitsgeschwindigkeit der heute problemlos und kostengünstig massenhaft erhältlichen Datenverarbeitungsanlagen ist aber auch die exaktere Berechnung gemäß der ersteren Formel in derart schneller Zeit möglich, dass man bezüglich der Raschheit der Feststellung des Ortes eines auftreffenden Lichtflecks, das Empfinden einer Echtzeitmessung hat.

Je nach Fläche und benötigter Auflösung können auf der Detektorfläche beliebig viele Photodetektoren, bevorzugt in einem regelmäßigen Muster, montiert werden.

Je dichter die Photodetektoren montiert sind, desto größer ist die Mindestsignalstärke und dementsprechend die Auflösung des Bauteils bei gleicher Ausleseelektronik. In Experimenten mit einem optimierten Wellenleiter auf Basis einer mit Farbstoffen dotierten Plastikplatte konnte eine Genauigkeit auf besser als +/-1 mm bei einem Abstand der Photodetektoren von 12cm in einem quadratischen Muster erlangt werden.

Für die Montage der Photodetektoren am Lichtwellenleiter sollte ein Klebstoff verwendet werden, der in ausgehärtetem Zustand einen guten optischen Kontakt zwischen Wellenleiter und Photodetektor herstellt. Der "gute optische Kontakt" ist dann hergestellt, wenn der ausgehärtete Klebstoff für das Licht in der Wellenleitermode transparent ist und wenn sein Brechungsindex zwischen dem Brechungsindex des Wellenleiters 1 (also der Schicht 1.1) und dem Brechungsindex im angrenzenden Teil des Photodetektors beträgt. (Je kleiner der Unterschied der Brechungsindizes von angrenzenden Materialien ist, desto besser wird Licht durch die Grenzschicht zwischen den beiden Materialien hindurch geleitet.)

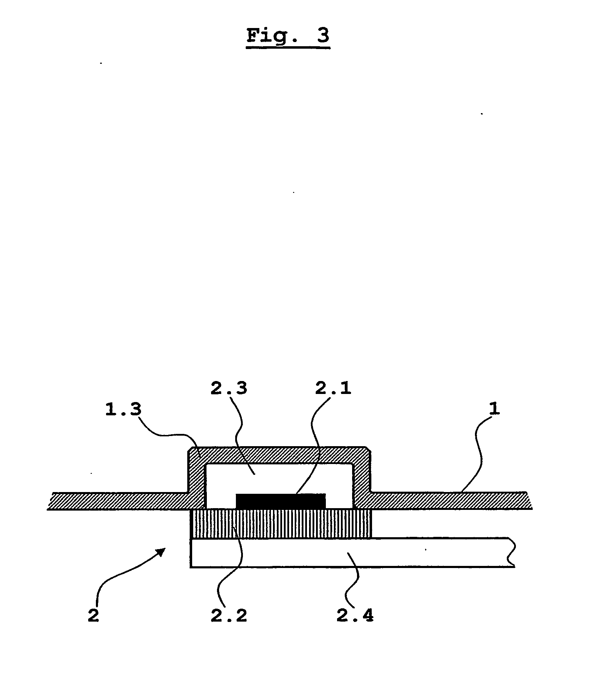

In Fig. 3 ist ein typischer Aufbau eines Photodetektors 2 und eine vorteilhafte Anordnung an einem Lichtwellenleiter 1 dargestellt.

Der Photodetektor 2 besteht aus einem photoelektrischen Element 2.1, typischerweise einem Stück Silizium-Wafer, welches elektrisch gesehen eine Photodiode oder einen Phototransistor darstellt. Eine Seite dieses Elementes 2.1 ist mit einer Seite eines typischerweise keramischen Basisplättchens 2.2 verbunden und mit dort angeordneten elektrischen Leitern elektrisch kontaktiert. Der elektrische Kontakt wird über ebenfalls mit dem Basisplättchen 2.2 verbundene, wegführende elektrische Leitungen 2.4 weiter geführt. Diese Leitungen können typischerweise durch Drähte oder eine Schicht auf einer flexiblen Platine gebildet sein.

Die lichtempfindliche Seite des photoelektrischen Elements 2.1 ist durch ein transparentes "Fenster" 2.3 eingefasst. Dieses Fenster, es besteht typischerweise aus einem transparenten Kunststoff ist mit dem Lichtwellenleiter 1 durch Kleben verbunden.

In der in Fig. 3 dargestellten, vorteilhaften Ausführungsform ist in den Lichtwellenleiter 1 am Ort der Verklebung mit dem Photodetektor eine Vertiefung 1.3 geprägt, deren Innenkontur gleich der Außenkontur des Fensters 2.3 ist. Das Fenster 2.3 ist in diese Vertiefung 1.3 eingelegt und mit dieser verklebt.

Durch diese geometrische Ausführung der Verbindungsfläche zwischen dem Photodetektor 2 und dem Wellenleiter 1 werden gegenüber einer Anordnung eines Photodetektors an einem ebenen, unverformten Bereich des Wellenleiters markante Vorteile erzielt. Die Verbindung ist mechanisch wesentlich robuster, die Baugruppe ist besser handhabbar, da der Photodetektor weniger vorsteht und die optische Verbindung zwischen Wellenleiter und Photodetektor ist besser.

Typischerweise sind die Querschnittsabmessungen eines Fensters 2.3 eines Photodetektors 2 in der Ebene des Wellenleiters etwa 2 mal 2 mm$^2$ und die normal dazu liegende Höhe beträgt dabei etwa 0,5 mm. Es hat sich gezeigt, dass die dazupassende Vertiefung 1.3 im Wellenleiter 1 problemlos durch Prägen herstellbar ist, wenn der Wellenleiter wie erfindungsgemäß festgelegt aus einem Polymer mit einer Schichtdicke von 20 bis 500 $\mu$m gebildet ist.

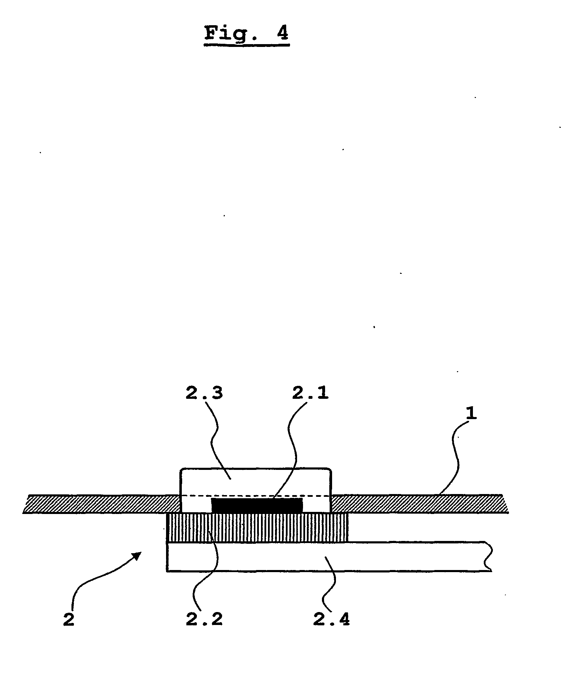

Gemäß Fig. 4 kann man einen Photodetektor 2 an einem Wellenleiter 1 auch befestigen, indem man am Wellenleiter eine Öffnung ausstanzt, welche genau die Querschnittkontur des Fensters 2.3 des Photodetektors 2 aufweist, das Fenster durch diese Öffnung hindurch steckt und die Schnittfläche der Öffnung im Wellenleiter mit dem Fenster 2.3 verklebt. Die Anordnung ist besonders flach. Es sei erwähnt, dass es auch möglich ist, einen Photodetektor durch ein Druck- oder Aufdampfungsverfahren direkt auf der Oberfläche des Wellenleiters herzustellen.

Der in Fig. 1 sichtbare Leuchtzeiger 4, kann ein Laser sein, welcher Teil eines Schusswaffensimulationsgerätes sein kann, und einen frequenzmodulierten, grünen Laserstrahl 3.1 mit einer Wellenlänge von 532 nm auf die Detektorfläche sendet. Dort wird dadurch in schon besprochener Weise Lumineszenz ausgelöst, dadurch entstehendes langwelligeres Licht im Wellenleiter 1 geleitet und durch dieses in den Photodetektoren 2 ein elektrisches Signal generiert. Dieses kann über Leitungen 5 und allenfalls ein Zwischenschaltgerät 6, welches einen Frequenzfilter und/oder Interface-Elektronikschaltung enthalten kann, an die Datenverarbeitungsanlage 7 weiter geleitet werden. Eine erfindungsgemäße Detektorfläche kann als flexible Schicht auf einer Kleidung für einen Menschen angebracht sein. Wird mit dem Laser 4 ein Lichtimpuls auf diese Detektorfläche gesandt, so werden die Koordinaten jenes Punktes auf der Detektorfläche an welchem der Lichtimpuls 3.1 des Lasers 4 auf der Anzeigefläche trifft, durch die Datenverarbeitungsanlage 7 erkennbar, indem diese beispielsweise mittels dem weiter oben skizzierten Algorithmus, aus den Signalen von mehreren Photodetektoren diese Koordinaten errechnet.

Die beschriebene Detektorfläche ist auch in großflächiger Ausführung kostengünstig herstellbar. Sie kann zur Gänze aus weitgehend durchsichtigen Materialien aufgebaut sein. Hierfür sind Farbstoffe vonnöten, welche nur an den Rändern oder außerhalb des sichtbaren Lichtspektrums absorbieren.

Da beispielsweise durch die Auswahl der photolumineszenten Partikel in der Schicht 1.2 eingestellt werden kann, dass nur ein bestimmtes, enges Spektrum von eintreffendem Licht überhaupt Lumineszenz auslöst, und indem ein Lichtzeiger 4 verwendet wird, welcher genau in diesem Spektralbereich stark leuchtet, kann die Vorrichtung sehr gut unempfindlich gegenüber Umgebungslicht gemacht werden.

Es ist auch möglich, durch den Lichtzeiger 4 Licht mit zeitlich frequenzmodulierter Intensität abzustrahlen. D.h. die Intensität des Strahls 3.1 schwankt zeitlich mit einer bestimmten Frequenz. Diese Frequenz wird mit nachrichtentechnischen Mitteln aus den von den Photodetektoren 2 gelieferten Signalen herausgefiltert. Indem unterschiedlich frequenzkodierte Laserstrahlen verwendet werden, ist es durch die Anwendung von Frequenzfiltern möglich, mehrere gleichzeitig auftreffende Laserstrahlen zu unterscheiden und deren jeweilige Auftreffpositionen auf der Detektorfläche zu erkennen.

Umgebungslicht kann auch durch eine auf der Detektorfläche angebrachte Schicht weggefiltert werden, welche nur Licht in einem bestimmten Spektralbereich durchlässt.

In einer vorteilhaften Weiterentwicklung können die an der Detektorfläche vorhandenen Photodetektoren zur Erzeugung von elektrischer Energie verwendet werden, welche z.B. für die Ausleseelektronik und eine drahtlose Datenübertragung genutzt wird.

Ergänzend sei noch betont, dass der Lichtstrahl 3.1 nicht zwangsweise ein Laserstrahl sein muss. Es ist nur so, dass sich dann, wenn der Lichtstrahl 3.1 ein Laserstrahl ist, besonders vorteilhafte Verhältnisse ergeben, da der Lichtstrahl damit in seinen Eigenschaften sehr exakt bestimmbar ist und die Detektion auch bei sehr großen Entfernungen von der Lichtquelle einfach möglich ist.

Die Anwendung zur Simulation von Schusswaffen wird optimalerweise verknüpft mit der Anbindung der Detektorfläche an ein mobiles Telekommunikationsgerät, welches die Trefferauswertung übernimmt und durch akustische und/oder optische Signale einen Treffer anzeigt. Des Weiteren kann das Telekommunikationsgerät eine drahtlose elektronische Verbindung zu einem Datenverarbeitungsgerät aufnehmen, um eine Auswertung des Geschehens auf einem Bildschirm oder über das Internet wiederzugeben.

Eine weitere vorteilhafte Anwendung ist die Montage der Detektorflächen an Oberflächen in und an Gebäuden, um sie als Schalter für verschiedene Einrichtungen wie z.B. Beleuchtung, Beschattungseinrichtungen, automatische Tore und Türen oder elektronische Geräte zu verwenden. Diese können mit einem Lichtzeiger aus der Entfernung aktiviert werden. Der Vorteil liegt darin, dass ein einziger Lichtzeiger als universelle Fernbedienung für eine Vielzahl von Anwendungen genutzt werden kann. Durch die Anordnung von Detektorflächen an bestimmten Geräten oder an bestimmten Flächenbereichen oder Teilen von Geräten kann eine einfache und klar verständliche Zuordnung geschaffen werden, welche Anwendung in welcher Weise geschaltet wird bzw. auf welche Anwendung durch das Schalten eingewirkt werden soll oder worüber durch das Schalten Informationen abgerufen werden sollen.

Durch eine für jeden Leuchtzeiger spezifische zeitliche Modulation kann digital codiert eine Seriennummer des Leuchtzeigers übertragen werden. Das Signal, welches von der Detektorfläche abgegeben wird enthält dann nicht nur eine Information über den Auftreffpunkt eines Lichtflecks, sondern auch eine alphanumerische Information aus welcher erkennbar ist, von welchem Leuchtzeiger der betreffende Lichtfleck stammt. Ein der Detektorfläche nachgeschaltetes, deren Signal verarbeitendes elektronisches Gerät, kann so programmiert sein, dass es diese Nummern lesen kann und nur Signale weiter verarbeiten lässt, die von einem oder mehreren ganz bestimmten Leuchtzeigern, die durch deren spezifische Seriennummern erkennbar sind, stammen. Das Schalten des zugehörigen Gerätes kann dann nur durch diese bestimmten Leuchtzeiger ausgelöst werden. Somit dient der Leuchtzeiger gleichzeitig als Schlüssel und als Fernbedienung. Bisher werden derartige Funktionen meist mittels Funk- oder ungerichteter Infrarotübertragung erreicht, was zur Folge hat, dass für jedes Gerät und jede Funktion eine andere Taste auf dem Eingabegerät belegt werden muss und dass das Signal abgefangen werden kann, um die Verschlüsselung zu dekodieren und das Gerät unbefugt nutzen zu können.

Durch die direkte Lichtübertragung im vorliegenden Fall ist ein unerwünschtes Abhören des Signals kaum möglich, da das Signal nur in eine Richtung versendet wird.

Außerdem wird das zu steuernde Gerät durch den Benutzer anvisiert, deswegen entfällt die Notwendigkeit, für alle Geräte und Funktionen Tasten auf der Fernbedienung bereitzustellen. Natürlich kann man auch an einem Zeigegerät mehrere Tasten vorsehen, durch welche zueinander verschieden codierte Leuchtzeiger ausgelöst werden können. Damit können einzelnen Flächenbereichen einer Detektorfläche unterschiedliche, zu schaltende Funktionen zugeordnet werden, je nachdem durch welche Taste eines Zeigegerätes der auf den Flächenbereich treffende Lichtzeiger ausgelöst wurde.

## Patentansprüche

1. Aus mehreren flächigen Schichten aufgebaute Detektorfläche für optische Signale, welche als flexible Hüllfläche um einen oder an einem Körper angeordnet ist um zu detektieren ob und/oder wo der Körper durch einen Leuchtzeiger (4) getroffen wird, wobei die Detektorfläche einen flächigen Lichtwellenleiter (1) umfasst , wobei zumindest eine Schicht des flächigen Lichtwellenleiters (1) photolumineszente Eigenschaften aufweist, und wobei der flächige Lichtwellenleiter (1) mit zumindest einem Photodetektor (2) über eine lichtdurchlässige Kontaktfläche verbunden ist, wobei am Auftreffpunkt des Leuchtzeigers (4) auf die Detektorfläche durch Photolumineszenz Licht generiert wird, welches sich im flächigen Lichtwellenleiter (1) ausbreitet und durch den zumindest einen Photodetoktor (2) detektierbar ist,
wobei die Intensität des durch Photolumineazenz generierten, sich im ausbreitenden Lichtes mit zunehmender Entfernung zum Auftreffpunkt des Leuchtzeigers (4) abnimmt und wobei aus dieser Abnahme der Intensität auf die Entfernung des jeweiliger Photodetektors (2) zum lauftreffpunkt des Leuchtzeigers schließbar ist,
**dadurch gekennzeichnet, dass**
der flächige Lichtwellenleiter (1) als Folie aus einem transparenten Polymer mit einer Dicke von 20 bis 500 $\mu$m gebildet ist und dass mindestens einer der Photodetektoren (2) von allen Rändern des Flächigen Lichtwellenleiters beabstandet am flächigen Lichtwellenleiter (1) angeordnet ist.

2. Detektorfläche nach Anspruch 1, **dadurch gekennzeichnet, dass** sie aus einer Mehrzahl von geometrisch aneinander angrenzenden Teilflächen aus Flächigen Lichtwellenleitern (1) aufgebaut ist, welche bezüglich der optischen Wellenleitung voneinander getrennt sind und wobei an jedem Lichtwellenleiter (1) mindestens ein Photodetektors (2) angeordnet ist.

**3.** Detektorfläche nach Anspruch 1 oder Anspruch 2, **dadurch gekennzeichnet, dass** mindestens ein Flächiger Lichtwellenleiter (1) mit mehreren im Abstand zueinander angeordneten Photodetektoren (2) versehen ist.

**4.** Detektorfläche nach einem der vorhergehenden Ansprüche, **dadurch gekennzeichnet, dass** ein Photodetektor (2) in eine Vertiefung (1.3) eines Flächigen Lichtwellenleiters eingeklebt ist.

**5.** Detektorfläche nach einem der Ansprüche 1 bis 3, **dadurch gekennzeichnet**, das ein Photodetektor (2) in eine Öffnung eines Flächigen Lichtwellenleiters (1) eingesetzt und mit den Rändern der Öffnung verklebt ist.

**6.** Detektorfläche nach einem der vorhergehenden Ansprüche, **dadurch gekennzeichnet, dass** dem zumindest einen Photodetektor (2) ein Frequenzfilter (6) nachgeschaltet ist.

**7.** Detektorfläche nach einem der vorhergehenden Ansprüche, **dadurch gekennzeichnet, dass** sie Teil der Bekleidung eines Menschen ist.

**8.** Detektorfläche nach einem der vorhergehenden Ansprüche, **dadurch gekennzeichnet, dass** sie als Schalter für ein Gerät benutzt wird, der mittels eines Leuchtzeigers (4) aus der Entfernung bedient werden kann.

**9.** Detektorfläche nach Anspruch 8, **dadurch gekennzeichnet, dass** das durch den Schalter geschaltete Gerät der Gegenstand selbst ist um bzw. an welchem die Detektorfläche angeordnet ist.

**10.** Detektorfläche nach Anspruch 8, **dadurch gekennzeichnet, dass** das durch den Schalter geschaltete Gerät auf denjenigen Gegenstand wirkt und/oder eine Information über Gegenstand erzeugt und/oder weiterleitet um bzw.
an welchem die Detektorfläche angeordnet ist.

**11.** Detektorfläche nach einem der Ansprüche 8 bis 10, **dadurch gekennzeichnet, dass** sie in Kombination mit einem Leuchtzeiger (4) in Verwendung ist, welcher ein für ihn kennzeichnendes zeitlich moduliertes Lichtsignal sendet und dass ihr ein Gerät nachgeschaltet ist, welches dazu in der Lage ist, die Verarbeitung des an sie von der Detektorfläche gelangenden, modulierten Signals in Abhängigkeit davon durchzuführen, welche Information in der Modulation codiert ist.

**Claims**

**1.** A detector surface for optical signals constructed from several planar layers, which is arranged as a flexible enveloping surface around or on a body in order to detect whether and/or where the body is struck by a light pointer (4), wherein the detector surface comprises a planar optical waveguide (1), wherein at least one layer of the planar optical waveguide (1) has photoluminescent properties, and wherein the planar optical waveguide (1) is connected via a translucent contact surface to at least one photodetector (2), wherein light is generated by photoluminescence at the point of impact of the light pointer (4) on the detector surface, which light propagates in the planar optical waveguide (1) and can be detected by the at least one photodetector (2), wherein the intensity of the light generated by photoluminescence and propagating in the planar optical waveguide (1) decreases at increasing distance from the point of impact of the light pointer (4), and wherein the distance of the respective photodetector (2) to the point of impact of the light pointer (4) can be extrapolated from this reduction of intensity, **characterized in that**
the planar optical waveguide (1) is designed as a film made of a transparent polymer having a thickness of 20 to 500 $\mu m$ and that at least one of the photodetectors (2) is arranged on the planar optical waveguide (1) at a distance from all edges of the planar optical waveguide (1).

**2.** A detector surface according to claim 1, **characterized in that** it is composed of a plurality of geometric adjacent subsections made of planar optical waveguides (1), which, with regard to the optical transmission, are separate from each other and wherein at least one photodetector (2) is arranged on each planar optical waveguide (1).

**3.** A detector surface according to claim 1 or claim 2, **characterized in that** at least one planar optical waveguide (1) is provided with several photodetectors (2) arranged at a distance to each other.

**4.** A detector surface according to one of the preceding claims, **characterized in that** a photodetector (2) is glued into a recess (1.3) of a planar optical waveguide (1).

**5.** A detector surface according to one of claims 1 to 3, **characterized in that** a photodetector (2) is inserted into an opening of a planar optical waveguide (1) and glued to the edges of the opening.

**6.** A detector surface according to one of the preceding claims, **characterized in that** a frequency filter (6) is connected downstream from the at least one pho-

**7.** A detector surface according to one of the preceding claims, **characterized in that** it is part of the clothing of a person.

**8.** A detector surface according to one of the preceding claims, **characterized in that** it is used as a switch for a device and said switch can be operated from a distance by means of a light pointer (4).

**9.** A detector surface according to claim 8, **characterized in that** the device switched by the switch is itself the object around or on which the detector surface is arranged.

**10.** A detector surface according to claim 8, **characterized in that**
the device switched by the switch affects the respective object and/or generates and/or forwards information about the respective object around or on which the detector surface is arranged.

**11.** A detector surface according to one of claims 8 to 10, **characterized in that** it is used in combination with a light pointer (4) which sends a light signal temporally modulated to be characteristic thereof and that a device is connected downstream of the detector surface, which device is in a position to carry out the processing of the modulated signal arriving at it from the detector surface, which information is coded in the modulation.

**Revendications**

**1.** Surface de détection constituée de plusieurs couches planes pour signaux optiques, laquelle est agencée sous forme d'une surface enveloppe flexible autour d'un ou sur un corps afin de détecter si le corps est touché par un pointeur lumineux (4) et afin de de détecter où le corps est touché par un pointeur lumineux, la surface de détection comprenant un guide d'ondes optiques planaire (1), au moins une couche du guide d'ondes optiques planaire (1) présentant des propriétés photoluminescentes et le guide d'ondes optiques planaire (1) étant relié à au moins un photodétecteur (2) par l'intermédiaire d'une surface de contact transparente à la lumière, de la lumière étant générée par photoluminescence au point d'impact du pointeur lumineux (4), laquelle se propage dans le guide d'ondes optiques planaire (1) et à travers lequel elle peut être détecté par au moins un photodétecteur (2), l'intensité de la lumière générée par photoluminescence se propageant dans le guide d'ondes optiques planaire (1) diminuant au fur et à mesure de l'éloignement avec le point d'impact du pointeur lumineux (4) et où l'intensité décroissante permet de déterminer la distance entre le photodétecteur (2) respectif et le point d'impact du pointeur lumineux (4),
**caractérisé en ce que**
le guide d'ondes optiques planaire (1) est réalisé sous la forme d'un film composé d'un polymère transparent ayant une épaisseur comprise entre 20 et 500 $\mu$m et **en ce qu'**au moins un des photodétecteurs (2) est agencé sur le guide d'ondes optiques planaire (1) à une certaine distance de tous les bords du guide d'ondes optiques planaire (1).

**2.** Surface de détection selon la revendication 1, **caractérisée en ce qu'**elle est composée d'une pluralité de surfaces partielles de guides d'ondes optiques planaires (1) géométriquement adjacentes, lesquelles sont séparées du guide d'ondes optiques planaire et au moins un photodétecteur (2) étant agencé sur chaque guide d'ondes optiques planaire (1).

**3.** Surface de détection selon la revendication 1 ou la revendication 2, **caractérisée en ce qu'**au moins un guide d'ondes optiques planaire (1) est prévu avec plusieurs photodétecteurs (2) disposés à distance les uns des autres.

**4.** Surface de détection selon l'une des revendications précédentes, **caractérisée en ce qu'**un photodétecteur (2) est collé dans un évidement (1.3) d'un guide d'ondes optiques planaire (1).

**5.** Surface de détection selon l'une des revendications 1 à 3, **caractérisé en ce qu'**un photodétecteur (2) est inséré dans une ouverture d'un guide d'ondes optiques planaire (1) et est collé aux bords de l'ouverture.

**6.** Surface de détection selon l'une des revendications précédentes, **caractérisé en ce qu'**un filtre de séquence (6) est monté en aval d'au moins un photodétecteur (2).

**7.** Surface de détection selon l'un des revendications précédentes, **caractérisée en ce qu'**elle fait partie du vêtement d'une personne.

**8.** Surface de détection selon l'une des revendications précédentes, **caractérisée en ce qu'**elle est utilisée comme commutateur pour un appareil qui peut être actionné à distance au moyen d'un pointeur lumineux (4).

**9.** Surface de détection selon la revendication 8, **caractérisée en ce que** l'appareil relié par le commutateur est l'objet lui-même autour duquel ou sur lequel la surface de détection est disposée.

**10.** Surface de détection selon la revendication 8, **ca-**

todetector (2).

**ractérisée en ce que** l'appareil commuté par le commutateur agit sur cet objet et/ou génère une information sur cet objet et/ou transmet à cet objet autour duquel ou sur lequel la surface de détection est disposée.

11. Surface de détection selon l'une des revendications 8 à 10, **caractérisée en ce qu'**elle est utilisée en combinaison avec un pointeur lumineux (4), lequel envoie un signal lumineux modulé temporellement le caractérisant et **en ce qu'**un appareil lui est monté en aval, lequel est en mesure d'effectuer le traitement du signal modulé lui parvenant par la surface de détection en fonction de l'information codée dans la modulation.

# Fig. 1

# Fig. 2

## Fig. 3

EP 2 394 209 B1

# Fig. 4

2.3    2.1       1

2    2.2    2.4

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070176165 A1
- US 20070152985 A1
- DE 3511757 A1
- DE 4239389 A1
- EP 354996 A2
- EP 225625 A2
- DE 2952608 A1
- DE 3413372 A1